# EUROPEAN PATENT APPLICATION

(11) **EP 4 840 523 A1**
(43) Date of publication of application: **18.11.2026**
(21) Application number: 25176277.9
(22) Date of filing: 14.05.2025
(51) Int. Cl.: A63F 13/35, A63F 13/355, A63F 13/77

(54) **DETERMINING CLOUD GAMING QUALITY OF EXPERIENCE**

(71) Applicant: Cujo LLC, Covina, CA 91723 (US)
(72) Inventor: Yaffe, Dorel, 6473118 Tel Aviv (IL)
(74) Representative: TBK

(57) **Abstract**

An active cloud gaming session that is streamed in a network traffic between a connected device and a cloud gaming service is detected (102). Display characteristics of the connected device are obtained (108). Actual network quality of service parameters for the network traffic of the active cloud gaming session are computed (118). A cloud gaming quality of experience for a user of the connected device during the active cloud gaming session is determined (122) based on an analysis of the actual network quality of service parameters taking into account the display characteristics.

## Description

### FIELD

The invention relates to a method, apparatus, computer program product, and computer-readable medium.

### BACKGROUND

Cloud gaming is an innovative technology that enables gamers to play video games streamed from remote servers over the Internet, rather than running them on local connected devices. This approach offers several advantages, including reduced hardware requirements for users, instant access to a wide range of games, and the ability to play on various connected devices. However, the user experience of cloud gaming is highly dependent on network conditions. Evaluating the cloud gaming experience is crucial for ensuring user satisfaction and optimizing performance. Traditional methods focus on basic network metrics, may be proprietary for the specific cloud gaming service, and may require specific measurement software running on the connected device of the gamer. Further sophistication in the cloud gaming experience evaluation is desirable.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A and FIG. 1B are flowcharts illustrating examples of a method;
FIG. 2 is a block diagram illustrating example implementation environments for the method;
FIG. 3A and FIG. 3B are block diagrams illustrating examples of a cybersecurity apparatus;
FIG. 4 is a block diagram illustrating an example of a connected device;
FIG. 5 is a block diagram illustrating an example of a computing resource; and
FIG. 6A and FIG. 6B are block diagrams illustrating examples of an Internet access network element.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

A cloud gaming experience may be evaluated with an objective cloud gaming quality of experience. An active cloud gaming session between a connected device and a cloud gaming service is detected. Display characteristics of the connected device are obtained. Actual network quality of service parameters are computed for a network traffic of the active cloud gaming session. By analyzing the actual network quality of service parameters in conjunction with the display characteristics (possibly reflected in optimal network quality of service parameters), the cloud gaming quality of experience for the user during the active cloud gaming session may be determined. This approach aims to evaluate the cloud gaming experience by taking into account both network performance and device capabilities.

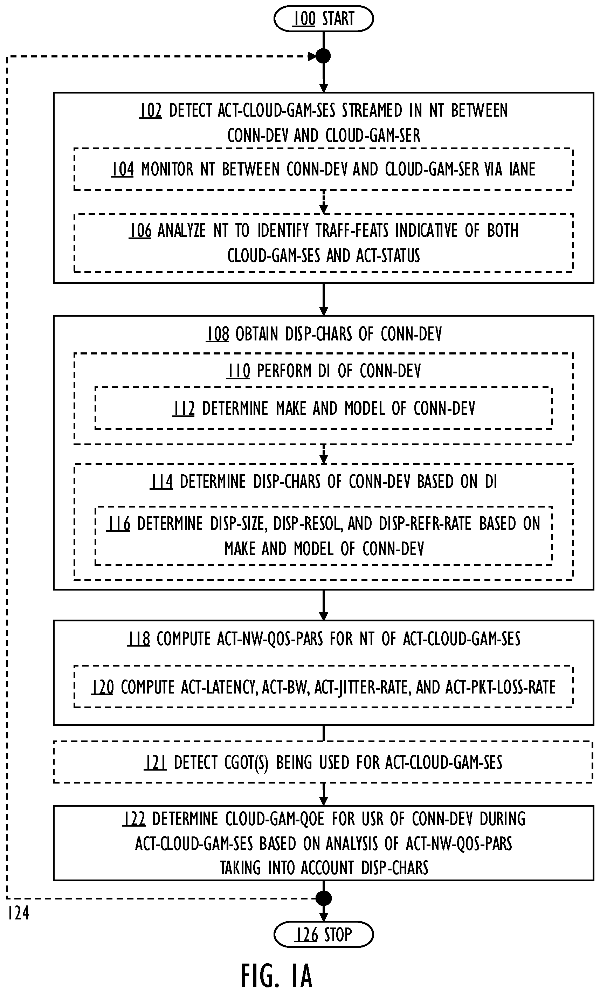

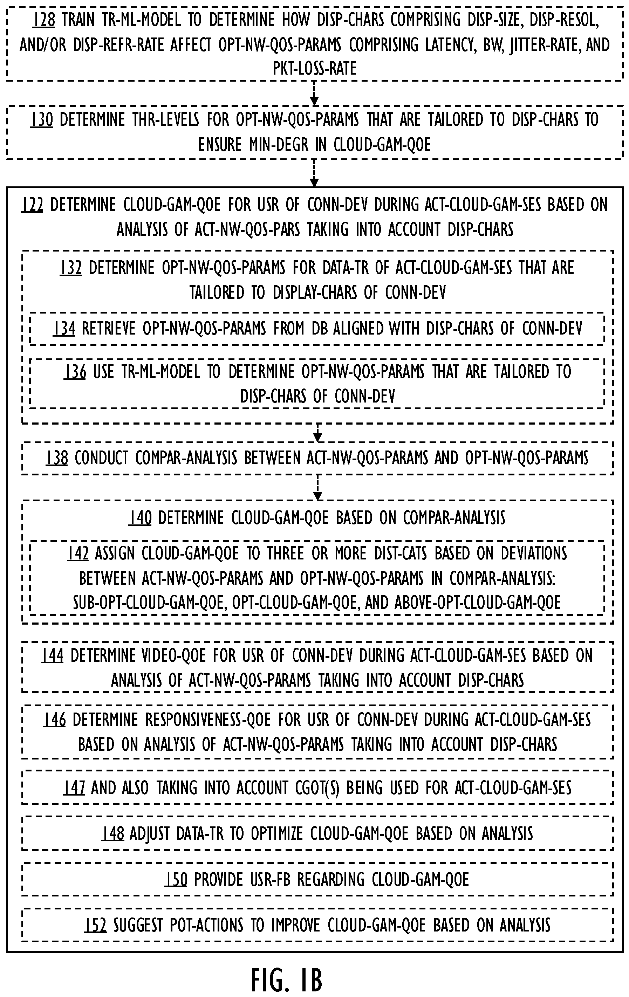

FIG. 1A and FIG. 1B are flowcharts illustrating examples of a computer-implemented method. The method performs operations related to determining a cloud gaming quality of experience for a cloud gaming session. The method starts in 100 and ends in 126. The method may run in principle endlessly. The infinite running may be achieved by looping 124 back.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

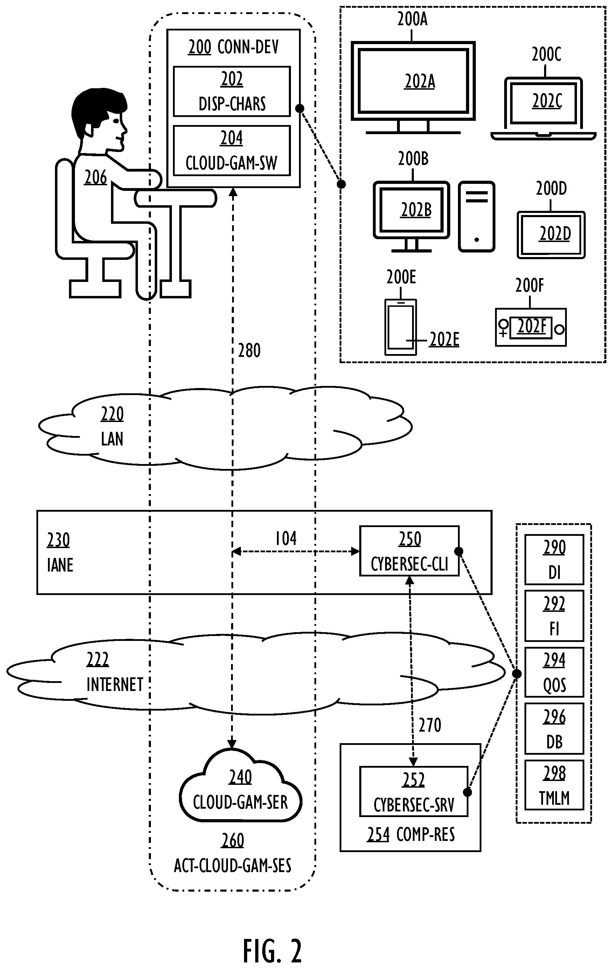

FIG. 2 is a block diagram illustrating example implementation environments for the computer-implemented method. The method may operate within an Internet access network element 230, but optionally also partly within a computing resource 254.

An active cloud gaming session 260 that is streamed in network traffic 280 between a connected device 200 and a cloud gaming service 240 is detected 102.

In an example, detecting 102 the active cloud gaming session 260 further comprises monitoring 104 the network traffic 280 between the connected device 200 and the cloud gaming service 240 via the Internet access network element 230, and analyzing 106 the network traffic to identify one or more traffic features indicative of both a cloud gaming session and an active status of the cloud gaming session. As shown in FIG. 2, the monitoring 104 may be performed by the Internet access network element 104.

Cloud gaming, also known as Game-as-a-Service (GaaS), allows users 206 to play video games that are rendered in the cloud gaming service 240 and streamed to their connected devices 200 over the Internet 222. Detection 102 may be achieved by monitoring 104 the network traffic 280 for specific patterns or signatures indicative of a cloud gaming activity, such as high bandwidth usage and frequent data packet exchanges.

The connected device 200 runs appropriate software 204 enabling an (online) active cloud gaming session 260. The software 204 may comprise a cloud gaming client, such as GeForce^{®} NOW, which is a cloud gaming service by NVIDIA^{®} that allows users to stream games from remote servers to various connected devices 200 such as computers and mobile devices. Other well-known cloud gaming clients include Xbox^{®} Game Pass Ultimate, Shadow^{™}, Sony^{®} PlayStation Plus, Nintendo^{®} Switch Online, and Boosteroid^{™}. The software 204 may also comprise a web browser, such as Google^{®} Chrome, Mozilla^{®} Firefox, or Microsoft^{®} Edge, because many cloud gaming services 240, such as and Amazon^{®} Luna, may be accessed directly through web browsers. The software 204 may also comprise dedicated mobile apps for Apple^{®} iOS and Google^{®} Android, enabling users 206 to play cloud games on their smartphones and tablets.

The cloud gaming service 240 also runs appropriate game hosting software on remote servers enabling an online cloud gaming session 260, such as NVIDIA^{®} GeForce NOW, Parsec ^{™}, and Sunshine^{™}. Furthermore, the cloud gaming service 240 uses other software, including, but not being limited to: software for virtualization and containerization, such as VMware^{®}, and Docker^{®}, software for network management such as ZeroTier^{™}, and Tailscale^{™}, and content delivery network (CDN) software, such as Akamai^{®}.

Detecting 102 the active cloud gaming session 260 involves identifying when a cloud gaming session is currently in progress. The detection 102 may be performed in real-time or near real-time.

To detect active cloud gaming sessions in the network traffic 280 generated by the connected device 200, one must identify indicators such as traffic patterns (the cloud gaming service 240 may generate high-bandwidth traffic one way with continuous uploads to their respective domains), packet traces (the cloud gaming service 240 may have unique packet size distributions and flow characteristics), service specific endpoints (each cloud gaming service 240 communicates with specific servers, and identifying these endpoints may help in recognizing the service), Server Name Indication (SNI), Domain Name System (DNS) queries, Internet Protocol (IP) addresses, Autonomous System Numbers (ASN), and other unique identifiers associated with cloud gaming providers like NVIDIA^{®} GeForce NOW. These indicators help distinguish active gameplay sessions from mere menu browsing. Additionally, continuous monitoring of bandwidth statistics, both upload and download, may verify the presence of a live video stream being downloaded from the cloud gaming service 240 and constant input data being uploaded from the connected device 200, confirming an active cloud gaming session 260.

Using any of the above methods to detect the cloud gaming session 260, 5-tuple flows in the layer 3 (Source-IP, Source-Port, Destination-IP, Destination-Port, Protocol) that are relevant for a particular cloud gaming session 260 may be inferred. These 5-tuples may be used for the quality of service measuring.

Real-time detection refers to the immediate identification of an active cloud gaming session 260 as it happens. This requires constant monitoring and processing of the network traffic 280 with minimal delay. Real-time systems typically operate with latencies in the order of milliseconds. In the context of the cloud gaming, the real-time detection ensures that any changes in network conditions or user actions are instantly recognized and addressed to maintain optimal performance.

Near real-time detection involves identifying an active cloud gaming session 260 with a slight delay, typically in the range of seconds to a few minutes. This approach balances the need for timely detection with the practical limitations of data processing and transmission. In the cloud gaming, the near real-time detection allows for quick adjustments to network conditions and user interactions, ensuring a high-quality cloud gaming experience.

To achieve real-time or near real-time detection, the system continuously monitors the network traffic 280 between the connected device 200 and the cloud gaming service 240. This involves analyzing the network traffic 280 for specific patterns or signatures indicative of cloud gaming activity, such as high bandwidth usage, frequent data packet exchanges, and specific protocol usage (for example, User Datagram Protocol (UDP) for low-latency communication). Technologies like deep packet inspection (DPI) and machine learning algorithms may be employed to enhance the accuracy and efficiency of the detection. The deep packet inspection refers to a network security technique that examines the data part (and possibly the header) of a packet as it passes an inspection point (such as the Internet access network element 230).

The network traffic 280 refers to a flow of data packets across a network between the connected device 200 and the cloud gaming service 240, encompassing all types of data transmitted and received by devices connected to the network. This includes data generated by applications, services, and protocols that facilitate communication between devices. Network traffic may be categorized based on various criteria, such as the type of data being transmitted (e.g., video, audio, text), the source and destination of the data, and the protocols used for the transmission.

The network traffic 280 is typically measured in terms of bandwidth, which is the amount of data transmitted per unit of time, usually expressed in Megabits per second (Mbps). Key parameters that characterize the network traffic 280 also include a latency, a jitter, and a packet loss rate.

In the context of cloud gaming, the network traffic 280 is critical as it directly impacts the quality of the gaming experience. The cloud gaming service 240 relies on the continuous transmission of high-bandwidth video streams from the remote servers to the (user) connected devices 200. This requires a stable and high-performance network to ensure smooth gameplay.

The network traffic 280 comprises a process of sending and receiving data packets between the connected device 200 and the Internet access network element 230. This transmission is governed by various networking standards, including Ethernet (IEEE 802.3) for wired connections and Wi-Fi^{®} (IEEE 802.11) for wireless connections. The connected device 200 may support various Wi-Fi^{®} standards, including, but not being limited to the IEEE^{®} 802.11a/b/g/n/ac/ax (Wi-Fi 6), Wi-Fi 6E and Wi-Fi 7. These standards determine the speed, range, and frequency bands (2.4 GHz, 5 GHz, and 6 GHz) for the network traffic 280. The quality and reliability of this transmission are crucial for maintaining a seamless cloud gaming experience.

Display characteristics 202 of the connected device 200 are obtained 108. The display characteristics 202 refer to attributes of a display of the connected device 200. Different connected devices 200 have varying display characteristics 202 that affect the cloud gaming experience.

As shown in FIG. 2, the connected device 200 may be a smart television 200A, a desktop computer 200B, a laptop computer 200C, a tablet computer 200D, a smartphone 200E, or a game console 200F, for example. Each of these different device types 200A, 200B, 200C, 200D, 200E, 200F has a different kind of a display with specific display characteristics 202A, 202B, 202C, 202D, 202E, 202F. Note that some game consoles, such as Nintendo Switch^{®} and Valve Steam Deck^{®}, have a built-in display, and their specific display characteristics 202F refer to the built-in display. Other game consoles, such as Sony PlayStation 5^{®} and Microsoft Xbox Series S/X^{®}, do not have a built-in display, and their specific display characteristics 202F refer to the characteristics they support for a separate display connected to the game console 202F.

In an example, obtaining 108 the display characteristics 202 further comprises performing 110 a device identification 290 of the connected device 200, and determining 114 the display characteristics 202 of the connected device 200 based on the device identification 290. Furthermore, performing 110 the device identification 290 may further comprise determining 112 a make and a model of the connected device 200, and determining 114 the display characteristics 202 may further comprise determining 116 a display size, a display resolution, and a display refresh rate based on the make and the model of the connected device 200. In this way, the display characteristics 202 of the connected device 200 may be obtained directly based on the device identification 290 of the connected device 200, or more specifically based on the make and model of the connected device 200. For example, if the device identification 290 determines that the connected device 200 is an Apple iPhone 15, the display characteristics 202 may be retrieved from a database 296. Instead of determining 112 the make and model of the connected device 200, determining the type (a smart TV, a laptop, a smartphone, a Windows^{®} gaming PC, etc.) of the connected device 200 may be adequate for determining the display characteristics 202. Note that a specific cloud gaming service 240 may only support a specific display configuration, such as 1080p at 60 Hz, in which case the display characteristics 202 may be set according to this supported display configuration.

The display characteristics 202 may be defined using standards like the Extended Display Identification Data (EDID), defined by the Video Electronics Standards Association (VESA).

A typical smart television 200A may have the following display characteristics 202A: a display size of 55-75 inches, a display resolution of 3840 x 2160 pixels, and a display refresh rate of 60 Hz to 120. A typical desktop computer 200B, may have the following display characteristics 202B: a display size of 27-32 inches, a display resolution of 3840 x 2160 pixels, and a display refresh rate of 60 Hz to 144 Hz. A typical laptop computer 200C may have the following display characteristics 202C: a display size of 13-16 inches, a display resolution of 2560 x 1600 pixels (13-inch) to 3456 x 2234 pixels (16-inch), and display refresh rate of 60 Hz to 120 Hz. A typical tablet computer 200D may have the following display characteristics 202D: a display size of 10-13 inches, a display resolution of 2388 x 1668 pixels (11-inch) to 2732 x 2048 pixels (12.9-inch), and a display refresh rate of 120 Hz. A typical smartphone 200E may have the following display characteristics 202E: a display size of 6.1-6.7 inches, a display resolution of 2532 x 1170 pixels to 2778 x 1284 pixels, and a display refresh rate of 120 Hz. A typical game console 200F may have the following display characteristics 202F: a display size of 6.2 inches, or 7.0 inches, a display resolution of 1280 x 720 pixels (handheld mode) up to 1920 x 1080 pixels (TV mode), and a display refresh rate of 60 Hz.

Actual network quality of service (QoS) parameters for the network traffic 280 of the active cloud gaming session 260 are computed 118.

The actual network quality of service parameters refer to specific metrics that quantify the performance and reliability of a network connection during the cloud gaming session 260.

In an example, the actual network quality of service parameters comprise a latency, a bandwidth, a jitter, and a packet loss rate.

The latency refers to a time it takes for data to travel from a source to a destination, often measured in milliseconds. Lower latency means quicker response times, which is crucial for real-time cloud gaming to ensure smooth and responsive gameplay. A high latency may cause noticeable delays in game controls, making fast-paced games difficult to play.

In addition to the latency, or alternatively, a round-trip time (RTT) may be utilized as one actual network quality of service parameter. The round-trip time measures the total time it takes for a packet to travel from the source to the destination and back again, also measured in milliseconds. The round-trip time includes the latency in both directions plus the processing time at the destination. Lower round-trip time is essential for maintaining a seamless cloud gaming experience, as it affects how quickly feedback from the cloud gaming server 240 is received. The round-trip time may be measured by filtering the relevant packets (packets sent to the destination and the corresponding acknowledgment packets) for the right 5-tuple flows, and by examining the Transmission Control Protocol (TCP) handshake or the Internet Control Message Protocol (ICMP) echo requests and replies. The round-trip time may be obtained by subtracting the timestamp of the sent packet from the timestamp of the acknowledgment packet.

The bandwidth refers to a maximum rate at which data may be transmitted over a network connection, typically measured in Megabits per second (Mbps). A higher bandwidth allows for streaming games in higher resolutions and frame rates, enhancing the visual quality.

The jitter refers to a variation in packet arrival times, which may cause inconsistent frame delivery and stuttering in gameplay. The jitter is often measured in milliseconds. Minimizing jitter is essential for maintaining a smooth and immersive cloud gaming experience, especially on high-refresh-rate displays.

The packet loss rate refers to a percentage of data packets that fail to reach their destination, resulting in visual artifacts and disruptions in gameplay. High packet loss rate can lead to pixelation and freezing, severely degrading the cloud gaming experience.

In an example, computing 118 the actual network quality of service parameters further comprises computing 120 an actual latency, an actual bandwidth, an actual jitter, and an actual packet loss rate.

Computing 118 actual network quality of service parameters involves measuring key metrics that define the performance and reliability of the network connection 280 during the active cloud gaming session 260. The quality of service parameters are needed for assessing the network's ability to support high-quality cloud gaming.

A novel measure, a cloud gaming quality of experience (CGQoE) for a user 206 of the connected device 200 during the active cloud gaming session 260, is determined 122 based on an analysis of the actual network quality of service parameters taking into account the display characteristics 202. In the analysis, values of the network quality of service parameters are evaluated, also taking into account values of the display characteristics 202. The display characteristics 202 may be taken into account indirectly by determining optimal network quality of service parameters based on the display characteristics 202.

As an example, let us consider Samsung^{®} Galaxy S24 as the connected device 200 having the active cloud gaming session 240 with NVIDIA^{®} GeForce NOW as the cloud gaming service 240. The computed 120 actual network quality of service parameters are: the actual latency 60 ms, the actual bandwidth 50 Mbps, the actual jitter 12 ms, and the actual packet loss rate 0 %. The optimal network quality of service parameters are (based on the display resolution of 1080p and the display refresh rate of 120 Hz): the optimal latency 40 ms, the optimal bandwidth 15 Mbps, the optimal jitter 10 ms, and the optimal packet loss rate < 10 ms. The cloud gaming quality of experience may then be defined as optimal regarding a video quality of experience for the user 206, but sub-optimal determining regarding a responsiveness (or latency) quality of experience for the user 206.

To play a cloud gaming session 260 using the NVIDIA^{®} GeForce NOW, the network requirements vary based on the resolution and frame rate. The bandwidth requirement is typically: 15 Mbps for 720p at 60 FPS, 25 Mbps for 1080p at 60 FPS, 35 Mbps for 1440p at 120 FPS, and 45 Mbps for 4K at 120 FPS. The latency requirement is typically less than 80 ms (recommended less than 40 ms). The jitter requirement is ideally less than 30 ms. The packet loss rate requirement is typically less than 1%.

To play a cloud gaming session 260 using the Nintendo^{®} Switch Online, the network requirements are as follows: the bandwidth at least 15 Mbps, the latency less than 80 ms (recommended less than 40 ms), the jitter ideally less than 30 ms, and the packet loss rate less than 1 %.

In the context of determining the cloud gaming quality of experience for the user 206, the relationship between the actual network quality of service parameters and the display characteristics needs to be evaluated. The evaluation may be quite complex with a trained machine learning model, or relatively simple by using predetermined optimal network quality of service parameters for different makes and models (or types) of the connected device 200.

The latency refers to the delay between a cloud gaming user interface action by the user 206 and the corresponding response in the game being played in the active cloud gaming session 260. A high latency may cause a noticeable lag, which disrupts the cloud gaming experience. The impact of the latency is more pronounced on larger displays with higher resolutions and refresh rates, as these setups demand more timely data to maintain smooth gameplay.

The bandwidth is the amount of cloud gaming data that may be transmitted over the network in a given time. A higher bandwidth allows for higher resolution and frame rates, which are essential for maintaining visual quality on displays with large sizes and high resolutions. An insufficient bandwidth may lead to a lower resolution and frame rate, degrading the cloud gaming experience.

The jitter refers to the variability in packet arrival times. A high jitter may cause inconsistent frame delivery, leading to stuttering and a less smooth cloud gaming experience. This is particularly problematic for displays with high refresh rates, as they require consistent frame delivery to maintain fluid motion.

The packet loss rate increases when data packets fail to reach their destination. This may result in visual artifacts, such as a pixelation or freezing, which are more noticeable on high-resolution displays. A high packet loss rate may also disrupt the smoothness of gameplay, especially on displays with high refresh rates.

Larger display sizes provide a more immersive experience but also make any disruptions in the cloud gaming experience more noticeable. Issues like the latency, the jitter, and the packet loss may be more apparent on larger screens.

Higher display resolutions offer better visual quality but require more data to be transmitted. This makes the cloud gaming experience more sensitive to bandwidth limitations and packet loss.

Higher display refresh rates result in smoother motion and better responsiveness. However, they also demand more consistent and timely data delivery, making the cloud gaming experience more susceptible to issues like the latency and the jitter.

By analyzing the actual network quality of service parameters in conjunction with the display characteristics 202, the cloud gaming quality of experience may be accurately determined, ensuring an optimal cloud gaming experience for the user 206.

In this way using the operations 102, 108, 118, and 122, the cloud gaming quality of experience may be determined for the user 206 of the connected device 200. The determined cloud gaming quality of experience is invaluable as such for assessing the active cloud gaming session 260 in an objective way, i.e., the analysis is not subjective to each gamer 206, but is applicable to the gamers in general. However, determining 122 the cloud gaming quality of experience may be supplemented with one or more additions so as to apply the determined cloud gaming quality of experience. In the first addition, the network traffic 280 is adjusted 148 (in real-time or near real-time, or also after the cloud gaming session 260 is ended) to optimize the cloud gaming quality of experience based on the analysis. In the second addition, user feedback is provided 150 (in real-time or near real-time, or also after the cloud gaming session 260 is ended) regarding the cloud gaming quality of experience. In the third addition, potential actions to improve the cloud gaming quality of experience based on the analysis are suggested 152 (in real-time or near real-time, or also after the cloud gaming session 260 is ended).

The described solution provides a tool for a network service provider (NSP) to evaluate, improve, and detect issues around cloud gaming in a vendor-agnostic way without invading a privacy of the user 206 and without having to install endpoint software agents on the connected devices 200.

Improving the cloud gaming quality of experience involves addressing network and/or device-specific factors. The network performance may be optimized by reducing latency (for example, implementing edge computing may bring remote servers of the cloud gaming service 240 closer to the users 206, reducing latency and improving responsiveness), increasing bandwidth (for example upgrading network infrastructure to support higher bandwidth may ensure smoother network traffic 280, essential for high-resolution and high-framerate cloud gaming), and minimizing the jitter and the packet loss rate (for example, using advanced network protocols and error correction techniques may help minimize the jitter and the packet loss rate, ensuring a more stable and consistent cloud gaming experience). The display capabilities may be enhanced by adaptive streaming (for example, implementing adaptive streaming technologies that adjust the video quality based on real-time network conditions may help maintain a consistent cloud gaming experience even during network fluctuations), and optimizing display settings (for example ensuring that the display settings (resolution, refresh rate) are optimized for the connected device 200 may enhance visual quality and reduce the strain on network resources). In addition to these, a user-centric approach (for example developing algorithms that personalize the cloud gaming quality of experience management based on individual user preferences and device capabilities may significantly enhance the cloud gaming experience), or a feedback mechanism (for example implementing user feedback mechanisms to continuously monitor and adjust the cloud gaming quality of experience parameters may help in dynamically optimizing the cloud gaming experience) may be applicable.

As shown in FIG. 2, the operations 102, 108, and 118 may be augmented by the following functionalities implemented in the Internet access network element 230, and/or in the computing resource 254. A device identification functionality 290 performs a device identification of the connected device 200 as it connects to the Internet access network element 230. Identifying device types and models based on the network traffic 280 involves analyzing various characteristics across different layers of the network stack. A port-based identification relies on the specific ports used by the connected devices 200. For example, certain connected devices 200 may use specific ports for communication, which may help in identifying the device type. A statistical identification involves analyzing statistical features of the network traffic 280, such as packet size distribution, inter-arrival times, and flow durations. Different connected device types or models often have unique statistical signatures. A behavioral identification operates by observing the behavior of the network traffic 280, such as a periodicity and patterns of communication, whereby it is possible to infer the type of connected device 200. A protocol analysis is based on the fact that different device types use different protocols. Analyzing the protocols and the values in certain fields in use may help in identifying the device type. By combining the above techniques with machine learning algorithms may enhance the accuracy of the device identification. By training models on labeled traffic data, it is possible to classify devices with high accuracy.

An application flow identification functionality 292 identifies all network flows of an active cloud gaming session 260 transferred in the network traffic 280. A quality of service measurement functionality 294 computes the actual network quality of service parameters. A database 296 stores the optimal network quality of service parameters aligning with the display characteristics 202 of the connected device 200. A trained machine learning model 298 determines the optimal network quality of service parameters to align with the display characteristics 202 of the connected device 200

Next, let us study further examples of determining 122 the cloud gaming quality of experience for the user 206 of the connected device 200 during the active cloud gaming session 260.

In a first further example, determining 122 the cloud gaming quality of experience further comprises determining 132 optimal network quality of service parameters for the network traffic 280 of the active cloud gaming session 260 that are tailored to the display characteristics 202 of the connected device 200, conducting 138 a comparative analysis between the actual network quality of service parameters and the optimal network quality of service parameters, and determining 140 the cloud gaming quality of experience based on the comparative analysis. Note that obtaining 108 the display characteristics 202 and determining 132 the optimal network quality of service parameters may also be a combined operation based on the device identification 290 of the connected device 200. As certain make and model of the connected device 200 has specific display characteristics 202, the optimal network quality of service parameters may be defined directly for the make and model of the connected device 200 without obtaining the display characteristics 202 of the connected device 200 as a separate operation.

The values of the display size, the display resolution, and the display refresh rate (in Hertz) determine the optimal video quality (in terms of resolution, framerate, bit rate, etc.) in the database 296, which is relevant to that specific connected device 200. For example, there is no perceived user experience value in having a 4K (3840 x 2160 pixels, which is four times the pixel count of Full HD (1080p) video) stream on a tiny phone screen even if the screen has a high resolution, and there is no perceived user experience value in having 240 Hz framerate if that is on a 60 Hz tablet, but there is value in sending a 4K and 120 Hz stream to a high-end TV.

The video quality (resolution, refresh rate, bitrate) is mostly bounded by the bandwidth available for the connected device 200 (for example, a 4K and 120 Hz stream requires a 50 Mbps bandwidth) but also sensitive to the latency, the packet loss rate and the jitter for the live stream (for example, the latency ≤ 150-300 ms, the jitter ≤ 10 ms - 50 ms, the packet loss rate ≤ 0.5 %).

For responsiveness (no perceived lag, hitching or stuttering) when the user 206 uses the input method (mouse and keyboard, game controller, touchscreen, etc.), the action should have feedback with minimal latency on the screen in the live video stream of the game in order for the gameplay experience to be fluid and the experience to feel as it is running on a local machine and not in the cloud gaming service 240.

The optimal values for responsiveness required varies by the display characteristics 202 of the connected device 200. If the connected device 200 has a high refresh rate screen (for example 144 Hz), the required optimal latency should be even lower than that on a lower refresh rate (for example 60 Hz). Since the latency of the network is a major part of the input latency perceived by the user 206, this is the main metric to focus on, in addition to the packet loss rate and the jitter, which may make the gameplay feel choppy even if the latency is low enough (as variability in the latency may also cause spikes of lag impacting the gameplay and making it inconsistent).

The database 296 matches the relevant values required from a quality of service perspective to the optimal values relevant for that device from the video and responsiveness quality aspect. This is done by taking into account factors such as the display size to the display resolution for an acuity of details on the display, the display refresh rate compared to the latency, etc.

Determining 132 the optimal network quality of service parameters may be implemented in at least two different ways (that may be used alternatively, but also simultaneously): retrieving 134 the optimal network quality of service parameters from the database 296 that aligns with the display characteristics 202 of the connected device 200, or using 136 the trained machine learning model 298 to determine the optimal network quality of service parameters that are tailored to the display characteristics 202 of the connected device 200.

The trained machine learning model 298 may be trained 128 to determine how the display characteristics 202 comprising one or more of a display size, a display resolution, and a display refresh rate affect the optimal network quality of service parameters comprising a latency, a bandwidth, a jitter, and a packet loss rate, and determine 130 threshold levels for the optimal network quality of service parameters that are tailored to the display characteristics 202 to ensure a minimal degradation in the cloud gaming quality of experience.

In a second further example, determining 122 the cloud gaming quality of experience further comprises assigning 142 the cloud gaming quality of experience to three or more distinct categories based on deviations between the actual network quality of service parameters and the optimal network quality of service parameters in the comparative analysis. The three or more distinct categories comprise a sub-optimal cloud gaming quality of experience, an optimal cloud gaming quality of experience, and an above-optimal cloud gaming quality of experience. In this way, the cloud gaming quality of experience may be objectively defined using three distinct categories. Instead of three categories, two categories (optimal and non-optimal) may be used, or more than three categories. Besides categories, another quantitative or qualitative scoring system may be used.

In a third further example, determining 122 the cloud gaming quality of experience further comprises determining 144 a video quality of experience for the user 206 of the connected device 200 during the active cloud gaming session 260 based on the analysis of the actual network quality of service parameters taking into account the display characteristics 202, and/or determining 146 a responsiveness (or latency) quality of experience for the user 206 of the connected device 200 during the active cloud gaming session 260 based on the analysis of the actual network quality of service parameters taking into account the display characteristics 202.

In a fourth further example, various cloud gaming optimization techniques are considered.

First, one or more cloud gaming optimization techniques being used for the active cloud gaming session 260 are detected 121.

Then, the cloud gaming quality of experience for the user 206 of the connected device 200 during the active cloud gaming session 260 is determined 122 based on the analysis of the actual network quality of service parameters taking into account the display characteristics 200 and also taking 147 into account the one or more cloud gaming optimization techniques being used for the active cloud gaming session 260.

The cloud gaming optimization technique (CGOT) refers to a set of technologies designed to improve the performance, responsiveness, and visual quality of the active cloud gaming session 260. These techniques comprise anti-lag technologies, AI-based video upscaling, adaptive bitrate streaming, and frame synchronization. These techniques may be implemented both in the cloud gaming service 240 and on the client 200 side, often leveraging the capabilities of the connected device 200. For example, a connected device 200 with an NVIDIA^{®} graphics processing unit (GPU) may use NVIDIA Reflex^{®} to reduce input latency and AI upscaling (such as Deep Learning Super Sampling, DLSS) to enhance video quality locally. This allows the cloud gaming service 240 to stream at lower resolutions or bitrates while still delivering a high-quality experience, effectively reducing the performance requirements of the network.

DLSS is a technology developed by NVIDIA^{®} that uses AI and machine learning to upscale lower-resolution images in real time, making them look like high-resolution images. This allows games to be rendered at a lower resolution (which is less demanding on the GPU), and then upscaled to a higher resolution (like 4K) with minimal loss in visual quality. DLSS works by training a neural network on high-quality images and then using that model to predict what a high-resolution frame should look like based on a lower-resolution input. The result is smoother performance and higher frame rates, especially in graphically intensive games, without sacrificing much visual fidelity.

The device type, such as smartphone, tablet, smart TV, game console, or PC, may indicate the general class of optimizations available. For instance, PCs and game consoles are more likely to support advanced latency reduction and upscaling features. Meanwhile, the device make and model, such as a specific NVIDIA-powered laptop or a Samsung smart TV with AI upscaling, may reveal precise capabilities that the cloud gaming service 240 may detect and leverage. Services like NVIDIA GeForce Now^{®} tailor their optimization strategies based on this information, enabling features like Reflex or GPU-accelerated upscaling when supported by the hardware of the connected device 200.

Some cloud gaming optimization technique may also be inferred from an analysis of the network traffic 280. Adaptive bitrate streaming may be visible, as it results in fluctuating video segment sizes or bitrates. Anti-lag techniques may be inferred from consistently low input-to-response latency or regular input packet timing, suggesting predictive input handling. If the connected device 200 receives a consistently low-resolution stream despite having a high-resolution display, it may indicate a client-side AI upscaling.

Table 1 is a comparison chart that maps various cloud gaming optimization techniques to different device types and specific device makes and models where applicable.

**Table 1**

| **Device type** | **Anti-lag** | **AI upscaling** | **Adaptive bitrate streaming** |
|---|---|---|---|
| Smartphones | Limited | No | High |
| Tablets | Limited | No | High |
| Smart TVs | Moderate | High (Samsung AI TV) | High |
| Game consoles | High | Moderate | High |
| PCs and laptops | High | High (NVIDIA GPU laptop) | High |

**Table 2**

| **Device type** | **Resolution** | **Refresh rate, Hz** | **Bitrate, Mbps** | **Other parameters** |
|---|---|---|---|---|
| PCs and laptops | 1080p, 1440p, 4k | 60-240 | 15-45 | Ensure a stable internet connection, preferably wired |
| Smartphones | 1080p | 60-120 | 10-15 | Use Wi-Fi 5 GHz and above, enable game mode |
| Tablets | 1080p | 60-120 | 10-15 | Use Wi-Fi 5 GHz and above, enable game mode |
| Smart TVs | 4K HDR | 60-120 | 25-40 | Use Ethernet connection, enable low latency / game mode mode |
| Game consoles | 1080p to 4K HDR | 60-120 | 15-25 | Use Ethernet or Wi-Fi 5 5 GHz and above |
| VR headsets | 1440p per eye | 90-120 | 20-30 | Use Wi-Fi 5 GHz and above |
| Streaming devices | 4K HDR | 60 | 25-40 | Use Ethernet, enable game mode on TV |

Table 2 gives examples of recommended settings for an optimal cloud gaming experience tailored to each connected device 200 category.

**Table 3**

| **Device type** | **Models** | **Resolution** | **Refresh rate, Hz** |
|---|---|---|---|
| PCs and laptops | Acer Predator Helios 300 Windows Gaming Laptop, MacBook Pro M3 | Up to 1440p | 60-120 |
| Smartphones | Google Pixel 9 Pro, iPhone 15 Pro | 1080p | 60 |
| Tablets | iPad Pro M2, Samsung Galaxy Tab S7 | 1080p | 60 |
| Smart TVs | Samsung QLED 4K, LG OLED CX | 4K HDR | 60 |
| Game consoles | Xbox Series X, PlayStation 5 | 1080p to 4K HDR | 60 |
| VR headsets | Meta Quest 2, Meta Quest Pro | 1440p per eye | 90-120 |
| Streaming devices | Nvidia Shield TV, Amazon Fire TV Stick 4K | 4K HDR | 60 |

Table 3 gives examples of recommended settings based on specific device models.

In the context of cloud gaming, it is important to balance the display resolution, the display size, and Pixels Per Inch (PPI) to ensure a smooth and visually pleasing experience without unnecessarily taxing the network or the processing capabilities of the connected device 200.

PPI is a measure of pixel density, indicating how many pixels are present per inch of a display. Higher PPI means more pixels are packed into each inch, resulting in sharper and more detailed images. The relationship between PPI, the display size, and the display resolution helps to understand the image quality:

PPI is calculated by dividing the number of pixels along the horizontal and vertical dimensions by the diagonal display size in inches. For example, a 1920x1080 resolution on a 24-inch monitor results in a PPI of approximately 92.

As the display size increases with the same resolution, PPI decreases because the same number of pixels are spread over a larger area. Conversely, a smaller display with the same resolution will have a higher PPI.

For cloud gaming, achieving optimal image quality does not always require the highest resolution. Instead, the focus should be on matching the resolution to the display size to maintain a high PPI. For instance, a 1080p resolution is sufficient for smartphones and tablets, while a 4K might be more suitable for larger screens like TVs.

The optimal PPI also depends on the viewing distance. Higher PPI is more noticeable at closer distances. For example, a smartphone held close to the eyes benefits from a higher PPI, while a TV viewed from several feet away does not need as high a PPI to appear sharp.

Table 4 shows example values that provide a general idea of the typical PPI and resolution for different device types, ensuring an optimal balance between image quality and performance.

**Table 4**

| **Device type** | **Models** | **Resolution** | **PPI** |
|---|---|---|---|
| PCs and laptops | Acer Predator Helios 300, MacBook Pro M3 | 1920x1080 to 2560x1440 | 92-110 |
| Smartphones | Google Pixel 9 Pro, iPhone 15 Pro | 1080x2400 to 1440x3200 | 400-550 |
| Tablets | iPad Pro M2, Samsung Galaxy Tab S7 | 2048x2732 to 2560x1600 | 264-300 |
| Smart TVs | Samsung QLED 4K, LG OLED CX | 3840x2160 (4K) | 50-100 |
| Game consoles | Xbox Series X, PlayStation 5 | 1920x1080 to 3840x2160 | 50-100 |
| VR headsets | Meta Quest 2, Meta Quest Pro | 1832x1920 per eye | 600-800 |
| Streaming devices | Nvidia Shield TV, Amazon Fire TV Stick 4K | 3840x2160 (4K) | 50-100 |

Same goes for the refresh rate for the specific device models, examples in Table 5 illustrate the typical refresh rates and resolutions for different device models, ensuring an optimal balance between image quality and performance.

**Table 5**

| **Device type** | **Models** | **Resolution** | **Refresh rate, Hz** |
|---|---|---|---|
| PCs and laptops | Acer Predator Helios 300, MacBook Pro M3 | 1920x1080 to 2560x1440 | 60-144 |
| Smartphones | Google Pixel 9 Pro, iPhone 15 Pro | 1080x2400 to 1440x3200 | 60-120 |
| Tablets | iPad Pro M2, Samsung Galaxy Tab S7 | 2048x2732 to 2560x1600 | 60-120 |
| Smart TVs | Samsung QLED 4K, LG OLED CX | 3840x2160 (4K) | 60 |
| Game consoles | Xbox Series X, PlayStation 5 | 1920x1080 to 3840x2160 | 60 |
| VR headsets | Meta Quest 2, Meta Quest Pro | 1832x1920 per eye | 90-120 |
| Streaming devices | Nvidia Shield TV, Amazon Fire TV Stick 4K | 3840x2160 (4K) | 60 |

Table 6 shows resolution and refresh rate examples to match the quality of service parameters.

**Table 6**

| **Resolution** | **Refresh rate, Hz** | **Latency, ms** | **Bandwidth, Mbps** | **Jitter, ms** | **Packet loss rate, %** |
|---|---|---|---|---|---|
| **1920x1080** | 60 | < 50 | 10-15 | < 30 | < 1% |
| **1920x1080** | 120 | < 40 | 15-20 | < 30 | < 1% |
| **2560x1440** | 60 | < 50 | 15-20 | < 30 | < 1% |
| **2560x1440** | 120 | < 40 | 20-25 | < 30 | < 1% |
| **3840x2160 (4K)** | 60 | < 50 | 25-40 | < 30 | < 1% |
| **1832x1920 per eye** | 90-120 | < 20 | 20-30 | < 10 | < 1% |

Table 6 may be amended to show the parameters per device type (and some example models) as in Table 7.

**Table 7**

| **Device type and models** | **Resolution** | **Refresh rate, Hz** | **Bandwidth, Mbps** | **Latency, ms** | **Jitter, ms** | **Packet loss rate, %** |
|---|---|---|---|---|---|---|
| PCs and laptops: Acer Predator Helios 300, MacBook Pro M3 | 1920x1080 to 2560x1440 | 60-120 | 15-25 | < 40 | < 30 | < 1% |
| Smartphones: Google Pixel 9 Pro, iPhone 15 Pro | 1920x1080 | 60-120 | 10-15 | < 50 | < 30 | < 1% |
| Tablets: iPad Pro M2, Samsung Galaxy Tab S7 | 1920x1080 | 60-120 | 10-15 | < 50 | < 30 | < 1% |
| Smart TVs: Samsung QLED 4K,LG OLED CX | 3840x2160 (4K) | 60 | 25-40 | < 50 | < 30 | < 1% |
| Game consoles: Xbox Series X, PlayStation 5 | 1920x1080 to 3840x2160 | 60 | 15-25 | < 50 | < 30 | < 1% |
| VR headsets: Meta Quest 2, Meta Quest Pro | 1832x1920 per eye | 90-120 | 20-30 | < 20 | < 10 | < 1% |
| Streaming devices: Nvidia Shield TV, Amazon Fire TV Stick 4K | 3840x2160 (4K) | 60 | 25-40 | < 50 | < 30 | < 1% |

Nvidia^{®} GeForce NOW requires at least:
- 45 Mbps for 4K resolutions at 120 FPS (i.e., 3840x2160),
- 35 Mbps for UW QHD & QHD resolutions at 120 FPS (i.e., 3840x1440 or 2560x1440),
- 35 Mbps for FHD resolutions at 240 FPS (i.e., 1920x1080),
- 25 Mbps for FHD resolutions at 60 FPS, and
- 15 Mbps for HD resolutions at 60 FPS.

However, another parameter of aligning the optimal latency required with the optimal refresh rate of the connected device 200 may be incorporated.

The refresh rate of a display and perceived input latency are closely related.

The refresh rate is the number of times per second that a display updates its image. Common refresh rates include 60 Hz, 120 Hz, 144 Hz, and 240 Hz.

The input latency is the delay between a user's action (like pressing a button) and the corresponding response on the screen, which greatly affects the experience.

Here is how they correlate:
Higher refresh rates reduce perceived input latency. A higher refresh rate means that the display updates more frequently. For example, a 120 Hz display refreshes twice as often as a 60 Hz display. This frequent updating reduces the time between an action and its visual feedback, making the input feel more immediate. Thus, a lower latency value is the optimal value for these higher refresh displays.

Faster reaction times. With higher refresh rates, the display may show changes more quickly, allowing users to react faster. This is particularly important in fast-paced gaming where every millisecond counts.

Increasing the refresh rate of a display may significantly reduce the perceived input latency, enhancing the overall responsiveness and fluidity of the user experience.

The latency in the cloud gaming refers to the delay between a player's input (like pressing a button) and the corresponding action appearing on the screen, this is the same latency discussed above, but it is influenced by several key elements:
- a network latency: the time it takes for data to travel from the player's device to the cloud server and back;

a processing latency: the time taken by the cloud server to process the input and render the game frame; and
a display latency: the time taken by the display to show the rendered frame.

Higher refresh rates may reduce the perceived latency in cloud gaming. For instance, a 120 Hz display updates every 8.3 ms, while a 60 Hz display updates every 16.7 ms.

This means that with a higher refresh rate, the display may show the latest frame more quickly, making the game feel more responsive.

For the cloud gaming, using a display with a higher refresh rate may improve the overall experience by reducing the perceived input latency and providing a smoother gameplay.

But that is applicable only in case of a stable and fast internet connection as it is crucial to minimize network latency, which, combined with a high refresh rate display, may significantly enhance the cloud gaming performance.

Table 8 matches common refresh rates to their corresponding input latency.

**Table 8**

| **Refresh rate, Hz** | **Frame time, ms** | **Perceived input latency, ms** |
|---|---|---|
| 60 | 16.67 | ~16.67 |
| 75 | 13.33 | ~13.33 |
| 120 | 8.33 | ~8.33 |
| 144 | 6.94 | ~6.94 |
| 165 | 6.06 | ~6.06 |
| 240 | 4.17 | ~4.17 |
| 360 | 2.78 | ~2.78 |

Frame time is the time it takes for one frame to be displayed. It is the inverse of the refresh rate. Perceived input latency is approximately equal to the frame time, as the display updates with each new frame. However, the general input latency may also be taken into account, as shown in Table 9.

**Table 9**

| **Refresh rate, Hz** | **Frame time, ms** | **Perceived input latency, ms** | **General input latency, ms** |
|---|---|---|---|
| 60 | 16.67 | ~16.67 | 50-100 |
| 75 | 13.33 | ~13.33 | 45-95 |
| 120 | 8.33 | ~8.33 | 40-90 |
| 144 | 6.94 | ~6.94 | 35-85 |
| 165 | 6.06 | ~6.06 | 30-80 |
| 240 | 4.17 | ~4.17 | 25-75 |
| 360 | 2.78 | ~2.78 | 20-70 |

The general input latency includes additional delays from processing, network, and other factors, providing a broader range of expected latency.

Higher refresh rates result in lower frame times, which in turn reduces the perceived input latency, making the display feel more responsive and reduces the general input latency, which forms the optimal latency required for the network traffic 280 of the active cloud gaming session 260 (if the actual latency is lower than the optimal latency, the cloud gaming quality of experience may be above optimal for the experience on that display, if the actual latency is higher than the optimal latency, the cloud gaming quality of experience value may be sub-optimal).

As used herein, the term "connected device" 200 refers to a physical computing device with communication capabilities.

As used herein, the term "Internet access network element" 230 refers to a physical device providing the local area network 220 for the connected device 200 and an access for the connected device 200 to the Internet 222.

The network traffic 280 may be transferred over a wireless connection between the connected device 200 and the Internet access network element 230. Alternatively, the network traffic 280 may be transferred over a wired connection between the connected device 200 and the Internet access network element 230. The connection is first established between the connected device 200 and the Internet access network element 230. Next, the network traffic 280 may extend from the connected device 200 via the local area network 220 and the Internet 222 to the cloud gaming service 240. The establishment of the connection may also require a communication with a domain name system (DNS) server (not illustrated in FIG. 2).

In the network traffic 280, data packets may be transferred from and to the connected device 200. In an example, the Internet access network element 230 is configured to generate a wireless non-cellular internet access network 220. The Internet access network element 230 may be configured to operate at a home or an office of a user 206 of the connected device 200. Alternatively, the Internet access network element 230 may be configured to operate in a public place.

Next, let us study how a cybersecurity operator is capable of monitoring the network traffic 280.

First, the network traffic between the connected device 200 and the Internet access network element 230 is monitored. A cloud gaming software 204, such as a web browser or a cloud gaming app running in the connected device 200 seeks to establish a connection to the cloud gaming service 240, for example. As shown in FIG. 2, the connection between the connected device 200 and the Internet access network element 230 is routed through an access of the Internet 222 to the cloud gaming service 240.

The connected device 200 is configured to execute the cloud gaming software 204, such as web user interface application (a web browser, for example), or a stand-alone application (a mobile app, for example), and as a result, the network traffic 280 from the connected device 200 to the cloud gaming service 240 via the local area network 220 and the Internet 222 is performed. The cloud gaming software 204 may automatically cause the network traffic 280, and/or, alternatively, the network traffic 280 may be generated as a result of an action by the user 206 through user interface controls of the cloud gaming software 204 and the connected device 200. The cloud gaming service 240 may be operated in a networked computing resource.

The connected device 200 may create the connection using a packet protocol from the cloud gaming software 204 of the connected device 200 to the cloud gaming service 240. The cloud gaming service 240 may include one or more servers hosting a server application enabling access by the cloud gaming software 204. Transmission Control Protocol/Internet Protocol (TCP/IP) is a packet protocol fundamental for internet communication, but less commonly used for cloud gaming data due to its higher latency compared to other protocols. User Datagram Protocol (UDP) is a packet protocol preferred for cloud gaming because it offers lower latency by not requiring acknowledgment of packet receipt, making it suitable for real-time network traffic 280. QUIC is a packet protocol developed by Google^{®} that combines the low-latency benefits of UDP with improved reliability and security features, and is therefore increasingly used in cloud gaming to enhance performance. Real-time Transport Protocol (RTP) is a packet protocol used for delivering audio and video over IP networks, and commonly employed in cloud gaming to stream multimedia content with low latency. Web Real-Time Communication (WebRTC) is a packet protocol that enables real-time communication over peer-to-peer connections, and often used in cloud gaming for its low-latency streaming capabilities. Some cloud gaming services use proprietary protocols optimized for low latency and high performance. For example, Parsec^{™} uses a protocol based on UDP with custom congestion control algorithms. In the Internet Protocol suite, the network traffic 280 is operated in a link layer, an internet layer, and a transport layer, and the requests transmitted in the network traffic 280 are operated in an application layer.

As used herein, the term "monitoring" refers to user-approved lawful interception or monitoring of the network traffic 280 with a purpose and goal of increasing cybersecurity related to the connected device 200 and its operating environment. As the network traffic 280 is monitored, the network traffic 280 is accessed and collected between the transmitting device and the receiving device. The network traffic 280 may be monitored even if the digital data transmission units (such as messages or packets) of the network traffic 280 are addressed to the receiving device (such as the Internet access network element 230, or the cloud gaming service 240). The monitoring may be implemented so that the network traffic 280 is passively monitored, i.e., the network traffic 280 is not affected by the monitoring. Alternatively, if needed, the monitoring may include a seizing of the network traffic 280, i.e., the network traffic 280 is actively influenced so that a connection and/or requests and/or responses are blocked until it may be decided whether a cybersecurity action (such as blocking of the network traffic 280) is required.

As used herein, the term "network traffic" comprises the transmission and/or reception of (digital) data between the connected device 200 and the Internet access network element 230. The network traffic 280 is transferred using digital data transmission units over a communication medium such as one or more communication channels between the connected device 200 and another network node such as the Internet access network element 230 or the cloud gaming service 240. Besides over a radio interface or a wired interface in the local area network 220, the data may be conveyed over another transmission medium (implemented by copper wires, or optical fibers, for example) on the Internet 222. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable network traffic 280. The communication protocols may implement a protocol stack with different conceptual protocol layers.

The network traffic 280 may be monitored by a cybersecurity client 250 operating in the Internet access network element 230. The network traffic 280 may be accessed and collected by the cybersecurity client 250. The cybersecurity client 250 may also access a data structure related to the network traffic 280 established and maintained at the Internet access network element 230 after a successful handshake sequence between the connected device 200 and the Internet access network element 230. The monitored network traffic 280 may be analyzed in order to perform an appropriate cybersecurity operation by the cybersecurity client 250, possibly augmented by a cybersecurity server 252 operating in a networked computing resource 254. Machine learning algorithms may use a number of other data items (such as device-specific unique radio interface characteristics, and other active and historic unique identifiers related to the connected device 200 and its communication) to enable the device identification.

The Internet 222 uses the Internet Protocol suite including TCP/IP and UDP/IP to globally connect computer networks so that communication is enabled between the connected devices 200 and various Internet services such as the cloud gaming service 240. The Internet 222 comprises public networks, private networks, academic networks, business networks, government networks, etc. interlinked with various networking technologies.

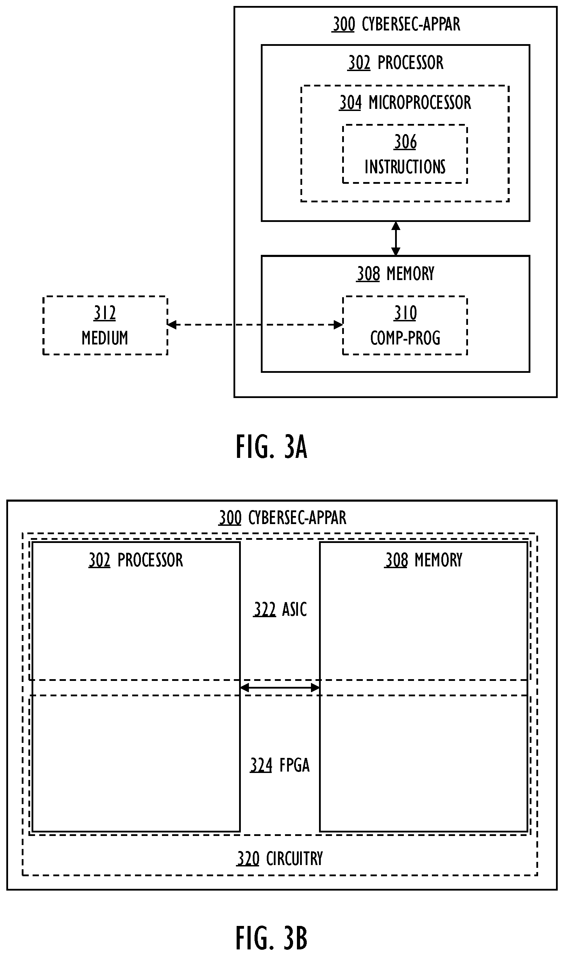

FIG. 3A and FIG. 3B are block diagrams illustrating examples of a cybersecurity apparatus 300. The method described with reference to FIG. 1A, and FIG. 1B may be implemented by the cybersecurity apparatus 300. The apparatus 300 may execute the operations defined in the method. The apparatus 300 may implement an algorithm, which includes the operations of the method, but may optionally include other operations related to the cybersecurity in general. Note that the method described with reference to FIG. 1A and FIG. 1B may be implemented as a part of the cybersecurity client 250 running in the Internet access network element 230 as shown in FIG. 2. As shown in FIG. 2, the cybersecurity apparatus 300 may comprise various distributed actors 250, 252 communicatively coupled 270 with each other.

The operations of the method may be implemented in connection with various other aspects of cybersecurity operations, such as a device identification, device intelligence, household intelligence, and application detection, for example.

Various technologies executed in the Internet access network element 230 and/or in the computing resource 254 may be used for the implementation of the method/algorithm.

An artificial intelligence (AI) implementation may enhance the detection and analysis of cloud gaming sessions by leveraging advanced algorithms to identify traffic patterns and optimize network performance. AI models may be trained to recognize specific characteristics of the cloud gaming traffic, such as the latency, the jitter, and the bandwidth usage, and dynamically adjust network settings to improve the cloud gaming experience. For example, AI may predict network congestion and proactively reroute traffic to maintain optimal cloud gaming quality of experience. Additionally, AI may analyze user behavior and preferences to personalize the cloud gaming experience, ensuring that display characteristics and network conditions are tailored to individual needs.

Neural networks may be employed to determine the cloud gaming quality of experience by analyzing the network quality of service parameters and the display characteristics. Feedforward and recurrent neural networks may process historical and real-time data to predict optimal network configurations for different device types and display resolutions. For instance, Long Short-Term Memory (LSTM) networks may model temporal dependencies in network performance, enabling the system to adapt to fluctuating conditions and maintain high cloud gaming quality of experience. Neural networks may also enhance video quality through techniques like super-resolution, improving the visual experience for users during cloud gaming sessions.

Machine learning (ML) techniques may be employed to compute the actual network quality of service parameters and determine the cloud gaming quality of experience. By training ML models on historical network data and user feedback, these models may accurately predict the actual quality of service parameters. ML algorithms may also identify patterns and correlations between display characteristics and network performance, enabling the system to adjust settings in real-time to optimize the cloud gaming experience. For instance, a trained ML model may determine the optimal network configuration for different device types and display resolutions, ensuring minimal degradation in the cloud quality of service experience.

Deep learning techniques may enhance the detection and analysis of cloud gaming sessions by leveraging neural networks to process large volumes of network data. Convolutional Neural Network (CNN) may be trained to recognize specific traffic patterns associated with cloud gaming, such as high bandwidth usage and low latency requirements. Deep learning models may dynamically adjust network settings based on real-time data, optimizing the cloud gaming experience by predicting and mitigating network congestion. Additionally, deep learning may improve the accuracy of the actual quality of service parameters computation, ensuring that the latency, the jitter, and the packet loss rate are minimized for a seamless cloud gaming experience.

A rule-based processing implementation involves predefined rules and logic to manage network traffic and the optimal quality of service parameters. This approach may be used to detect active cloud gaming sessions by monitoring the network traffic 280 and applying specific criteria to identify cloud gaming traffic. Once detected, the system may use rule-based algorithms to obtain display characteristics and compute the optimal network quality of service parameters based on established thresholds and conditions. For example, rules may be set to prioritize cloud gaming traffic over other types of data, ensuring that latency and bandwidth requirements are met for an optimal cloud gaming experience. Rule-based processing is straightforward and reliable, making it suitable for environments where consistent and predictable performance is required.

Clustering algorithms may be used to analyze network data and identify patterns indicative of cloud gaming sessions. By grouping similar data points, such as the latency, the jitter, and the bandwidth usage, clustering may help detect active cloud gaming sessions and optimize network performance. For example, K-means clustering may segment network traffic into clusters representing different types of cloud gaming activities, allowing the system to prioritize resources for high-demand sessions. This approach may also identify anomalies or outliers in network performance, enabling proactive adjustments to maintain the actual network quality of service parameters in an optimal level or range.

The cybersecurity apparatus 300 comprises one or more memories 308, and one or more processors 302 coupled to the one or more memories 308 configured to execute the operations described in FIG. 1A, and FIG. 1B.

The term "processor" 302 refers to a device that is capable of processing data. The term "memory" 308 refers to a device that is capable of storing data run-time (= working memory) or permanently (= non-volatile memory).

As shown in FIG. 3A, the one or more processors 302 may be implemented as one or more microprocessors 304, which are configured to execute instructions 306 of a computer program 310 stored on the one or memories 308. The microprocessor 304 implements functions of a central processing unit (CPU) on an integrated circuit. The CPU is a logic machine executing the instructions 306 of the computer program 310. The CPU may comprise a set of registers, an arithmetic logic unit (ALU), and a control unit (CU). The control unit is controlled by a sequence of the instructions 306 transferred to the CPU from the (working) memory 308. The control unit may contain a number of microinstructions for basic operations. The implementation of the microinstructions may vary, depending on the CPU design. The one or more microprocessors 304 may be implemented as cores of a single processor and/or as separate processors. Note that the term "microprocessor" is considered as a general term including, but not being limited to a digital signal processor (DSP), a neural processing unit (NPU), a quantum processing unit (QPU), a digital signal controller, a graphics processing unit (GPU), a system on a chip, a microcontroller unit (MCU), a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 310 may be written ("coded") by a suitable programming language, and the resulting executable code may be stored in the memory 308 and executed by the one or more microprocessors 304.

The computer program 310 implements the method/algorithm. The computer program 310 may be coded using a programming language, which may be a high-level programming language, such as C, C++, Python, Go, Rust, and P4, or with a low-level programming language, such as an assembler or a machine language. The computer program 310 may be in source code form, object code form, executable file, or in some intermediate form, but for use in the one or more microprocessors 304 it is in an executable form as an application. There are many ways to structure the computer program 310: the operations may be divided into modules, sub-routines, methods, classes, objects, applets, macros, etc., depending on the software design methodology and the programming language used. In modern programming environments, there are software libraries, i.e., compilations of ready-made functions, which may be utilized by the computer program 310 for performing a wide variety of standard operations. In addition, an operating system (such as a general-purpose operating system) may provide the computer program 310 with system services. A development environment may host various tools and frameworks, one example being GitHub^{®}.

As shown in FIG. 3A, a computer-readable medium 312 may store the computer program 310, which, when executed by the apparatus 300 (the computer program 310 may first be loaded into the one or more microprocessors 304 as the instructions 306 and then executed by one or more microprocessors 304), causes the apparatus 300 (or the one or more microprocessors 304) to carry out the method/algorithm. The computer-readable medium 312 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 310 to the one or memories 308 of the apparatus 300. In some jurisdictions, depending on the legislation and the patent practice, the computer-readable medium 312 may not be the wired or wireless telecommunications signal. The computer program 310 may be implemented as a computer program product comprising instructions which, when executed by the apparatus 300, cause the apparatus 300 to carry out the method.

As shown in FIG. 3B, the one or more processors 302 and the one or more memories 308 may be implemented by a circuitry 320. A non-exhaustive list of implementation techniques for the circuitry 320 includes, but is not limited to application-specific integrated circuits (ASIC) 322, field-programmable gate arrays (FPGA) 324, application-specific standard products (ASSP), standard integrated circuits, logic components, and other electronics structures employing custom-made or standard electronic circuits.

Note that in modern computing environments a hybrid implementation employing both the microprocessor technology of FIG. 3A and the custom or standard circuitry of FIG. 3B is feasible.

Functionality of the apparatus 300, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

Monitoring 104 the network traffic 280, and detecting 102 the active cloud gaming session 260, may be performed in connection with the Internet access network element 230, such as by the cybersecurity client 250. Obtaining 108 the display characteristics 202 of the connected device 200, computing 118 the actual network quality of service parameters, and determining 122 the cloud gaming quality of experience may be performed by the cybersecurity client 250, and/or by the cybersecurity server 252.

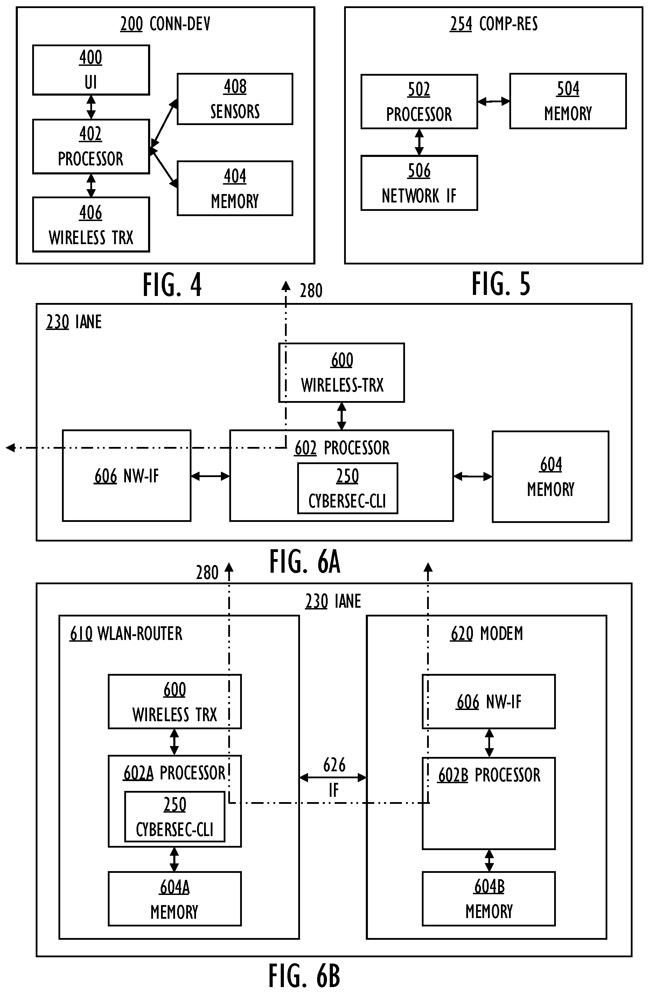

FIG. 4 is a block diagram illustrating an example of the connected device 200. The connected device 200 may be a terminal, a user equipment (UE), a radio terminal, a subscriber terminal, a smartphone 200E, a mobile station, a mobile phone, a desktop computer 200B, a portable computer, a laptop computer 200C, a tablet computer 200D, a smartwatch, smart glasses, a game console 200F, another kind of ubiquitous computing device (such as the smart television 200A, or some other type of a wired or wireless mobile or stationary communication device operating with or without a subscriber identification module (SIM) or an embedded SIM (eSIM). The connected device 200 may be a personal communication device of the user 206.

The connected device 200 comprises one or more memories 404, and one or more processors 402 coupled to the one or more memories 404 configured to carry out a functionality of the connected device 200. In addition, the connected device 200 comprises a user interface 400 (including a display with the display characteristics 202, and one or more input devices for giving game commands), and one or more wireless transceivers 406 (such as a WLAN transceiver, a cellular radio network transceiver, and a short-range radio transceiver), and also one or more sensors 408.

FIG. 5 is a block diagram illustrating an example of a computing resource 254 such as a server apparatus. The server apparatus 254 may be a networked computer server, which interoperates with the Internet access network element 230 according to a client-server architecture, a cloud computing architecture, a peer-to-peer system, or another applicable distributed computing architecture. As shown in FIG. 5, the server apparatus 254 comprises one or more memories 504, and one or more processors 502 coupled to the one or more memories 504 configured to carry out the functionality of the cybersecurity server 252. In addition, the server apparatus 252 comprises a network interface (such as an Ethernet network interface card) 506 configured to couple the server apparatus 252 to the Internet 222.

FIG. 6A and FIG. 6B are block diagrams illustrating examples of the Internet access network element 230. The Internet access network element 230 may be a customer-premises equipment (CPE). located in the household (usually at home but in some cases maybe at office) of the users 206 of the connected devices 200. Alternatively, or additionally, the Internet access network element 230 may be a public access point 230 configured to operate out of the home or the office of the users 206 as a hotspot serving the connected devices 200 in a public place such as a cafe, city center, shopping mall, airport, an arena, etc.

The Internet access network element 230 is stationary equipment connected to a telecommunication circuit of a carrier such as the network service provider (NSP) offering internet access using broadband or fixed wireless technologies at a demarcation point. The demarcation point may be defined as a point at which the public Internet 222 ends and connects with the local area network 220 at the home or office. In this way, the Internet access network element 230 acts as a network bridge, and/or a router.

In an example, the Internet access network element 230 is an edge router. The edge router connects the internal local area network 220 to the Internet 222, and is positioned at the boundary of a network. The edge router may include a neural processing unit designed to accelerate machine learning and artificial intelligence tasks. With the increased processing power, the edge router processes data locally, reducing latency and improving performance. Processing data at the edge router enhances privacy and security by minimizing the amount of data sent over the Internet 222. The edge router plays a crucial role in managing network traffic by intercepting and analyzing data packets at the boundary of the network. The edge router ensures an efficient routing, prioritizes critical traffic, and implements security measures to protect the network. By monitoring network traffic 280, the edge router may detect anomalies, optimizes performance, and maintains the quality of service for applications like cloud gaming.

The Internet access network element 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) local area network 220 and thus enabling user 206 of the connected device 200 to access communication services of the NSP, and the Internet 222. Note that the Internet access network element 230 may also be implemented with wireless technology, such as a 4G or 5G Internet access network element 230 configured to exchange a 5G cellular radio network signal with the Internet 222 accessible via a base station operated by the broadband service provider, and generate a Wi-Fi^{®} (or WLAN) or wired signal to implement the local area network 220 to provide access for the connected device 200. Furthermore, the 4G/5G Internet access network element 230 performs the conversion between the 4G/5G cellular radio network signal and the Wi-Fi^{®} or wired signal.

In FIG. 6A, the Internet access network element 230 is an integrated apparatus comprising one or more memories 604, and one or more processors 602 coupled to the one or more memories 604 configured to carry out a part of the method/algorithm in some examples. Additionally, the Internet access network element 230 comprises a wireless radio transceiver 600 configured to create the wireless local area network 220 for enabling access by the connected device 200. The Internet access network element 230 also comprises a network interface 606 to act as a modem configured to connect to the telecommunication circuit of the carrier at the demarcation point, i.e., to the Internet 222. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The Internet access network element 230 may be running the cybersecurity client 250.

In FIG. 6B, the Internet access network element 230 is a two-part apparatus. A WLAN router part 610 comprises the one or more memories 604A, the one or more processors 602A coupled to the one or more memories 604A configured to carry out the method/algorithm, and the wireless transceiver 600 to create the local area network 220 for enabling access by the connected device 200. A modem part 620 comprises the one or more processors 602B coupled to one or more memories 604B configured to carry out modem operations, and the network interface 606 to act as the modem configured to connect to the Internet 222. The WLAN router part 610 may be purchased by the user 206 of the connected device 200 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 250 another component running on the Internet access network element 230 may be configured to run a part of the algorithm implementing the method in some examples.

The Internet access network element 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the Internet access network element 230 based also on Linux. At the time of writing of this patent application, more information regarding the OpenWrt^{®} may be found in openwrt.org. Still another alternative implementation environment is provided by the prpl Foundation. At the time of writing of this patent application, more information regarding the prpl Foundation may be found in prplfoundation.org.

As can be understood by the person skilled in the art, the method/algorithm operations may in part be distributed among the distributed software comprising the cybersecurity client 250, and the cybersecurity server 254 in different configurations. In an example, the cybersecurity client 250 communicates 270 with the cybersecurity server 252 to implement the method/algorithm functionality.

Thus, the cybersecurity client 250 may in a stand-alone fashion carry out the method/algorithm, or a part of the method/algorithm functionality may be augmented by the functionality of the cybersecurity server 252. The cybersecurity client 250 may operate as a frontend with a relatively limited resources as regards to the processor and memory, whereas the cybersecurity server 252 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
detecting (102) an active cloud gaming session that is streamed in a network traffic between a connected device and a cloud gaming service;
obtaining (108) display characteristics of the connected device;
computing (118) actual network quality of service parameters for the network traffic of the active cloud gaming session; and
determining (122) a cloud gaming quality of experience for a user of the connected device during the active cloud gaming session based on an analysis of the actual network quality of service parameters taking into account the display characteristics.

2. The method of claim 1, wherein detecting (102) the active cloud gaming session that is streamed in the network traffic between the connected device and the cloud gaming service further comprises:
monitoring (104) the network traffic between the connected device and the cloud gaming service via an Internet access network element; and
analyzing (106) the network traffic to identify one or more traffic features indicative of both a cloud gaming session and an active status of the cloud gaming session.

3. The method of any preceding claim, wherein obtaining (108) the display characteristics of the connected device further comprises:
performing (110) a device identification of the connected device; and
determining (114) the display characteristics of the connected device based on the device identification.

4. The method of claim 3, wherein performing (110) the device identification of the connected device further comprises:
determining (112) a make and a model of the connected device, and
wherein determining (114) the display characteristics of the connected device based on the device identification further comprises:
determining (116) a display size, a display resolution, and a display refresh rate based on the make and the model of the connected device.

5. The method of any preceding claim, wherein the actual network quality of service parameters comprise a latency, a bandwidth, a jitter, and a packet loss rate.

6. The method of any preceding claim, wherein computing (118) the actual network quality of service parameters for the network traffic of the active cloud gaming session further comprises:
computing (120) an actual latency, an actual bandwidth, an actual jitter, and an actual packet loss rate.

7. The method of any preceding claim, wherein determining (122) the cloud gaming quality of experience for the user of the connected device during the active cloud gaming session based on the analysis of the actual network quality of service parameters taking into account the display characteristics further comprises:
determining (132) optimal network quality of service parameters for the network traffic of the active cloud gaming session that are tailored to the display characteristics of the connected device;
conducting (138) a comparative analysis between the actual network quality of service parameters and the optimal network quality of service parameters; and
determining (140) the cloud gaming quality of experience based on the comparative analysis.

8. The method of claim 7, wherein determining (132) the optimal network quality of service parameters for the network traffic of the active cloud gaming session that are tailored to the display characteristics of the connected device further comprises:
retrieving (134) the optimal network quality of service parameters from a database that aligns with the display characteristics of the connected device.

9. The method of claim 7 or 8, wherein determining (132) the optimal network quality of service parameters for the network traffic of the active cloud gaming session that are tailored to the display characteristics of the connected device further comprises:
using (136) a trained machine learning model to determine the optimal network quality of service parameters that are tailored to the display characteristics of the connected device.

10. The method of claim 9, further comprising:
training (128) the trained machine learning model to determine how the display characteristics comprising one or more of a display size, a display resolution, and a display refresh rate affect the optimal network quality of service parameters comprising a latency, a bandwidth, a jitter, and a packet loss rate; and
determining (130) threshold levels for the optimal network quality of service parameters that are tailored to the display characteristics to ensure a minimal degradation in the cloud gaming quality of experience.

11. The method of any preceding claim 7 to 10, wherein determining (140) the cloud gaming quality of experience based on the comparative analysis further comprises:
assigning (142) the cloud gaming quality of experience to three or more distinct categories based on deviations between the actual network quality of service parameters and the optimal network quality of service parameters in the comparative analysis, wherein the three or more distinct categories comprise a sub-optimal cloud gaming quality of experience, an optimal cloud gaming quality of experience, and an above-optimal cloud gaming quality of experience.

12. The method of any preceding claim, wherein determining (122) the cloud gaming quality of experience for the user of the connected device during the active cloud gaming session based on the analysis of the actual network quality of service parameters taking into account the display characteristics further comprises at least one of the following:
determining (144) a video quality of experience for the user of the connected device during the active cloud gaming session based on the analysis of the actual network quality of service parameters taking into account the display characteristics; and
determining (146) a responsiveness quality of experience for the user of the connected device during the active cloud gaming session based on the analysis of the actual network quality of service parameters taking into account the display characteristics.

13. The method of any preceding claim, further comprising:
detecting (121) one or more cloud gaming optimization techniques being used for the active cloud gaming session; and
determining (122) the cloud gaming quality of experience for the user of the connected device during the active cloud gaming session based on the analysis of the actual network quality of service parameters taking into account the display characteristics and also taking (147) into account the one or more cloud gaming optimization techniques being used for the active cloud gaming session.

14. The method of any preceding claim, wherein determining (122) the cloud gaming quality of experience for the user of the connected device during the active cloud gaming session based on the analysis of the actual network quality of service parameters taking into account the display characteristics further comprises at least one of the following:
adjusting (148) the network traffic to optimize the cloud gaming quality of experience based on the analysis;
providing (150) user feedback regarding the cloud gaming quality of experience; and
suggesting (152) potential actions to improve the cloud gaming quality of experience based on the analysis.

15. An apparatus comprising means for carrying out the method of any preceding claim 1-14.

16. A computer program product comprising instructions which, when executed by an apparatus, cause the apparatus to carry out the method of any preceding claim 1-14.

17. A computer-readable medium comprising a computer program with instructions which, when executed by an apparatus, cause the apparatus to carry out the method of any preceding claim 1-14.
